# EUROPEAN PATENT APPLICATION

(11) **EP 4 787 554 A1**
(43) Date of publication of application: **05.08.2026**
(21) Application number: 26151132.3
(22) Date of filing: 09.01.2026
(51) Int. Cl.: H01M 10/658, H01M 50/204, H01M 10/625, H01M 50/276, H01M 50/282, H01M 50/30

(54) **TECHNIQUES FOR CONTAINING BATTERY THERMAL RUNAWAY**

(30) Priority: 03.02.2025 US 202563753137 P; 24.06.2025 US 202519247253
(71) Applicant: Honeywell International Inc., Charlotte, NC 28202 (US)
(72) Inventor: GESELIUS, Dustin, Charlotte, 28202 (US); STAPLES, Jim, Charlotte, 28202 (US); RICHASON, Chad E, Charlotte, 28202 (US)
(74) Representative: Haseltine Lake Kempner LLP

(57) **Abstract**

Techniques are disclosed for shielding a device or a region external to the device from fire or heat generated by one or more batteries. For example, such shielding may prevent the device or the region from exposure to temperatures more than a first threshold level. Optionally, thermal insulating material can be disposed on or around portions of the device, including each battery. Optionally, different techniques may be combined.

## Description

### CROSS-REFERENCE TO RELATED APPLICATIONS

The present application claims benefit of U.S. Patent Application Serial No. 63/753,137 filed February 3, 2025; the entire contents of the aforementioned patent application are incorporated herein by reference as if set forth in its entirety.

### BACKGROUND

Lithium-ion batteries are used to provide electrical power in a wide range of devices. A lithium-ion battery is susceptible to catching fire and/or generating excessive heat. If the battery is used in a vehicle, *e.g.,* an aircraft, the resulting fire can lead to catastrophic damage to the vehicle, vehicle cargo, and vehicle passengers. In some cases, there are laws, rules, or regulations which place safety requirements on a device configured to be used in a vehicle, *e.g*., an aircraft. United States of America Federal Aviation Authority standard DO-227A is one example of such a requirement.

### SUMMARY

In some aspects, the techniques described herein relate to an electrical device including: a chassis; a chamber in the chassis including at least one battery compartment, wherein each battery compartment is configured to receive at least one battery; and a chamber cover configured to be mounted to the chassis and to cover the chamber; wherein the chamber cover includes a thermal insulating material, wherein the thermal insulating material includes a first surface and a second surface opposite the first surface, wherein the first surface and the second surface are separated by a width, and wherein the thermal insulating material (a) includes a ceramic matrix composite material, silica, and/or intumescent material, and/or (b) is configured to have a temperature differential between the first surface and the second surface of at least three hundred degrees Celsius when the width is less than or equal to a quarter of one inch; wherein the first surface, of the thermal insulating material of the chamber cover, faces the chamber.

In some aspects, the techniques described herein relate to an apparatus for reducing risk of fire and/or heat arising, from a battery, from spreading, the apparatus including: the battery; and thermal insulating material surrounding the battery except for a region through which passes one or more electrical conductors connected to the battery; wherein the thermal insulating material includes a first surface and a second surface opposite the first surface, wherein the first surface and the second surface are separated by a width, and wherein the thermal insulating material (a) includes a ceramic matrix composite material, silica, and/or intumescent material, and/or (b) is configured to have a temperature differential between the first surface and the second surface of at least three hundred degrees Celsius when the width is less than or equal to a quarter of one inch; wherein the first surface, of the thermal insulating material surrounding the battery, faces the battery.

In some aspects, the techniques described herein relate to an electrical device including: a chassis; a chamber in the chassis including at least one battery compartment, wherein each battery compartment is configured to receive at least one battery; a chamber cover configured to be mounted to the chassis and to cover the chamber; and an opening in the chassis configured to permit gas, heat, and/or flames to be exhausted from the chamber into an interior of the chassis.

### BRIEF DESCRIPTION OF THE DRAWINGS

Understanding that the drawings depict only exemplary embodiments and are not therefore to be considered limiting in scope, the exemplary embodiments will be described with additional specificity and detail through the use of the accompanying drawings, in which:
FIG. 1A illustrates a diagram of one embodiment of a device configured to receive electrical power from one or more batteries, e.g., one or more lithium-ion batteries, susceptible to catching fire and/or generating temperature levels in excess of a threshold level.
FIG. 1B illustrates a diagram of another embodiment of the device with the chamber exposed.
FIG. 1C illustrates a diagram of one embodiment of the chamber cover.
FIG. 2 illustrates a cross-sectional diagram of one embodiment of a wall of the thermally conductive material, of the chamber cover.
FIG. 3A illustrates a diagram of one embodiment of the battery compartment according to embodiments of the invention.
FIG. 3B illustrates a cross-sectional diagram of one embodiment of the battery compartment according to embodiments of the invention.
FIG. 4 illustrates a cross-sectional diagram of one embodiment of one or more insulated batteries according to embodiments of the invention.

In accordance with common practice, the various described features are not drawn to scale but are drawn to emphasize specific features relevant to the exemplary embodiments. Reference characters denote like elements throughout figures and text.

### DETAILED DESCRIPTION

In the following detailed description, reference is made to the accompanying drawings that form a part hereof, and in which is shown by way of illustration specific illustrative embodiments. However, it is to be understood that other embodiments may be utilized, and that structural, mechanical, and/or electrical changes may be made. Furthermore, each method presented in the drawing figures and the specification is not to be construed as limiting the order in which the individual steps may be performed. The following detailed description is not to be taken in a limiting sense.

Techniques are disclosed for shielding a device or a region external to the device from fire or heat generated by one or more batteries. For example, such shielding may prevent the device or the region from exposure to temperatures more than a first threshold level, *e.g*., defined in a specification, for example, 204 degrees Celsius. Thermal insulating material can be disposed on or around portions of the device, including each battery. Optionally, different techniques may be combined.

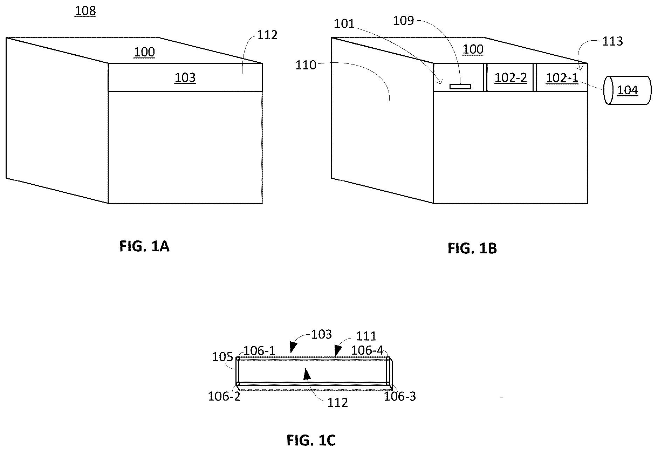

FIG. 1A illustrates a diagram of one embodiment of a device 100 configured to receive electrical power from one or more batteries, *e.g.*, one or more lithium-ion batteries, susceptible to catching fire and/or generating temperature levels in excess of a threshold level. The device 100 may be a payload, *e.g.,* a line replaceable unit (LRU) of a vehicle. The device is an electrical device, at least in apart, electrically powered by the one or more batteries. The device 100 is wholly or partly surrounded by an external environment 108.

The device 100 includes a chassis and a chamber cover 103. The chassis provides structural support for the device 100. Optionally, the chassis includes a metal, *e.g*., aluminum and/or a metal alloy.

The chamber cover 103 shields, and thus protects, a chamber including one or more battery compartments and contents, of the chamber, from the external environment 108. The chamber cover 103 is configured to be mounted to the device 100, *e.g.,* the chassis, and to cover the chamber including the one or more battery compartments and any contents thereof. The chamber cover 103 includes a wall 112 which provides, at least in part for the chamber cover 103, such shielding and thus protection. Optionally, the chamber cover 103 consists of thermal insulating material or thermal conductive material. Optionally, thermal conductive material is not thermal insulating material. Optionally, thermal conductive material includes a metal, *e.g*., aluminum, stainless steel (for example, 300 series stainless steel), inconel, and/or titanium, a metal alloy, diamond, aluminum nitride, aluminum oxide, silicon, and/or carbide graphite.

FIG. 1B illustrates a diagram of another embodiment of the device 100 with the chamber 113 exposed. The chamber 113 includes one or more battery compartments 102-1, 102-2. Each of the one or more battery compartments 102-1, 102-2 is configured to receive one or more batteries 104. Optionally, the chamber *113, e.g.,* the one or more battery compartments 102-1, 102-2, is within the chassis 101.

Typically, when the device 100 is in use, the one or more compartments are covered by a chamber cover 103. FIG. 1C illustrates a diagram of one embodiment of the chamber cover 103. The chamber cover 103 includes the wall 112 and a flange 111 around a periphery of the wall 112. The flange 111 is configured to face, and optionally contact, the chassis 101 or another portion of the device 100. Optionally, the flange 111 includes a recess in which a gasket 105 is resides; the gasket 105 contacts the chassis or another portion of the device 100 and prevents vapors and/or liquids from entering or exiting the chamber 113 when the chamber cover 103 is attached to the device 100, *e.g.,* the chassis 101 or another portion of the device 100. Optionally, the chamber cover 103 also includes one or more captive screws 106-1, 106-2, 106-3, 106-4 configured to mechanically attach the chamber cover 103 to, *e.g.,* screw holes in, the device 100, *e.g.,* the chassis 101 or another portion of the device 100. Optionally, the gasket 105 is made from rubber and/or a synthetic plastic. Optionally, the chamber cover 103 includes, or is made of, a thermally conductive material that has a thermal melting point above a second threshold level, *e.g.,* 600 degrees Celsius, for example stainless steel, *e.g.,* 300 series stainless steel, inconel, and/or titanium.

In another embodiment, the chamber 113, *i.e.,* at least one of the one or more battery compartments 102-1, 102-2 thereof or another portion of the chamber 113, includes a vent 109 which is an opening in material of the device 100, *e.g.,* the chassis 101, separating the battery compartment from an interior 110 of the device 100, *e.g.,* the chassis 101. The vent 109 is configured to permit gas, heat, and/or flames of a fire to be exhausted from the chamber 113, *e.g.,* one or more battery compartments thereof, into the interior 110 of the device 100, *e.g.,* the chassis 101.

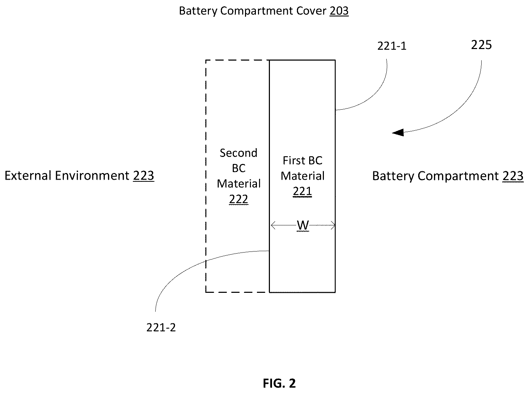

FIG. 2 illustrates a cross-sectional diagram of one embodiment of a wall 225 of the thermally conductive material, of the chamber cover 203. The chamber cover *203, e.g.,* the wall 225 thereof, includes a first chamber cover (BC) material 221 and an optional second chamber cover (BC) material 222. The first chamber cover material 221 faces and defines, in part, the battery compartment 223. The first chamber cover material 221 has a first surface 221-1 (facing and defining, in part, the battery compartment, *e.g*., one or more batteries) and a second surface 221-2 optionally adjoining the optional second chamber cover material 222. The first chamber cover material 221 has a width W between the first surface 221-1 and the second surface 221-2. The first surface 221-1 is opposite the second surface 221-2. Optionally, the first chamber cover material 221 is the thermally conductive material or a thermal insulating material. Optionally, the thermal insulating material is configured to have a temperature differential between the first and second surfaces 221-1, 221-2 of at least three hundred degrees Celsius when the width is less than or equal to a quarter of an inch. Optionally, the thermal insulating material has fire retardant properties. Optionally, the thermal insulating material is one of a ceramic matrix composite material, silica, intumescent material, thermal glass, or any type of thermal insulating material. The optional second chamber cover material 222 is either a thermal conductive material or a thermal insulating material. Thus, optionally, the first chamber cover material 221 is thermal insulating material and the optional second chamber cover material 222 is thermally conductive material. Alternatively and optionally, the first chamber cover material 221 is thermally conductive material and the optional second chamber cover material 222 is thermal insulating material.

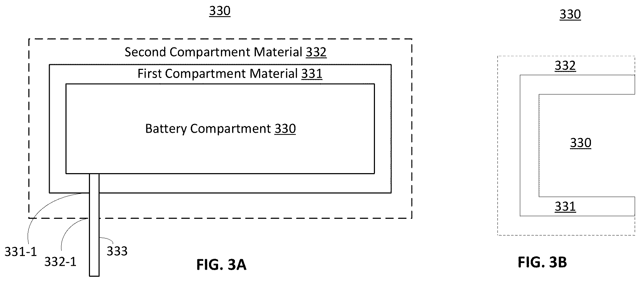

FIG. 3A illustrates a diagram of one embodiment of the battery compartment 330 according to embodiments of the invention. The battery compartment 330 is configured to receive at least one battery. The battery compartment 330 is defined by a first compartment material 331. The first compartment material 331 is either the thermally conductive material or the thermal insulating material. Optionally, such thermal insulating material may be sprayed on the set of one or more battery compartments and the chamber cover. If the first compartment material 331 is the thermal insulating material, then optionally the chamber cover and the set of one or more battery compartments each also includes an optional second compartment material 332 which covers the first compartment material 331 and is separated from the battery compartment 330 by the first compartment material 331. The optional second compartment material 332 is the thermal conductive material. Each of the first compartment material 331 and the optional second compartment material 332 (if used) have one or more penetrations 331-1, 332-1 through which electrical conductors 333 pass to convey electrical power to and/or from one or more batteries in the battery compartment 330. For example, the electrical conductors convey electrical power from the one or more batteries to the electronics components in the device.

FIG. 3B illustrates a cross-sectional diagram of one embodiment of the battery compartment 330 according to embodiments of the invention. The view of FIG. 3B is orthogonal to the view of FIG. 3A.

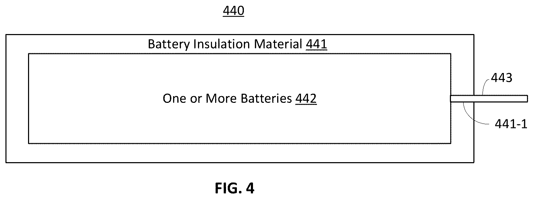

FIG. 4 illustrates a cross-sectional diagram of one embodiment of one or more insulated batteries 440 according to embodiments of the invention. Each of the one or more batteries 442 is surrounded or encased by battery insulating material 441 except for one or more penetrations which allow for electrical conductors to pass through the battery insulating material. The battery insulating material 441 includes, *e.g*., is, the thermal insulating material.

Optionally, each battery (*e.g.*, lithium-ion battery, susceptible to generating fire and/or temperatures more than a first threshold level), of a more than one such batteries, is individually enclosed by the battery insulating material 441. As a result, the fire, and/or temperatures more than the first threshold level in one battery will not cause fire and/or temperatures more than the first threshold level in another battery. The battery insulating material 441, encasing one or more batteries 442, includes a penetration 441-1 through which electrical conductors 443 pass to convey electrical power to and/or from one or more batteries 442.

While the present teachings have been illustrated with respect to one or more implementations, alterations and/or modifications can be made to the illustrated examples without departing from the scope of the appended claims. In addition, while a particular feature of the present disclosure may have been described with respect to only one of several implementations, such feature may be combined with one or more other features of the other implementations as may be desired and advantageous for any given or particular function. Furthermore, to the extent that the terms "including," "includes," "having," "has," "with," or variants thereof are used in either the detailed description and/or the claims, such terms are intended to be inclusive in a manner similar to the term "comprising." The term "at least one of" is used to mean one or more of the listed items can be selected. As used herein, the term "one or more of" with respect to a listing of items such as, for example, A and B or A and/or B, means A alone, B alone, or A and B. The term "at least one of" is used to mean one or more of the listed items can be selected.

Terms of relative position as used in this application are defined based on a plane parallel to the conventional plane or working surface of a material (*e.g.*, a layer or a substrate), regardless of orientation. Terms such as "on," "higher," "lower," "over," "top," and "under" are defined with respect to the conventional plane or working surface being on the top surface of a layer or substrate, regardless of orientation. The terms "about" or "substantially" indicate that the value or parameter specified may be somewhat altered, as long as the alteration does not result in nonconformance of the process or structure to the illustrated embodiment. Finally, "exemplary" indicates the description is used as an example, rather than implying that it is an ideal. Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

### EXAMPLE EMBODIMENTS

Example 1 includes an electrical device comprising: a chassis; a chamber in the chassis including at least one battery compartment, wherein each battery compartment is configured to receive at least one battery; and a chamber cover configured to be mounted to the chassis and to cover the chamber; wherein the chamber cover includes a thermal insulating material, wherein the thermal insulating material includes a first surface and a second surface opposite the first surface, wherein the first surface and the second surface are separated by a width, and wherein the thermal insulating material (a) includes a ceramic matrix composite material, silica, and/or intumescent material, and/or (b) is configured to have a temperature differential between the first surface and the second surface of at least three hundred degrees Celsius when the width is less than or equal to a quarter of one inch; wherein the first surface, of the thermal insulating material of the chamber cover, faces the chamber.

Example 2 includes the electrical device of Example 1, wherein the chamber cover further includes a thermal conductive material, wherein the thermal conductive material is not the thermal insulating material, and wherein the second surface, of the thermal insulating material of the chamber cover, faces the thermal conductive material.

Example 3 includes the electrical device of Example 2, wherein the thermal conductive material includes a metal, a metal alloy, diamond, aluminum nitride, aluminum oxide, silicon carbide, and/or graphite.

Example 4 includes the electrical device of any of Examples 1-3, further comprising a battery mounted in a battery compartment, wherein at least a portion of an exterior of the battery is covered by another thermal insulating material except for a portion through which passes one or more electrical conductors connected to the battery;wherein the other thermal insulating material includes another first surface and another second surface opposite the other first surface, wherein the other first surface and the other second surface are separated by another width, and wherein the other thermal insulating material (a) includes the ceramic matrix composite material, the silica, and/or the intumescent material, and/or (b) is configured to have a temperature differential between the other first surface and the other second surface of at least three hundred degrees Celsius when the other width is less than or equal to the quarter of one inch.

Example 5 includes the electrical device of any of Examples 1-4, further comprising an opening, in the chassis, configured to permit gas, heat, and/or flames to be exhausted from the chamber into an interior of the chassis.

Example 6 includes the electrical device of any of Examples 1-5, wherein each battery compartment, of the chamber, includes another thermal insulating material and one or more penetrations therein configured to pass electrical conductors; wherein the other thermal insulating material includes another first surface and another second surface opposite the other first surface, wherein the other first surface and the other second surface are separated by another width, and wherein the other thermal insulating material (a) includes the ceramic matrix composite material, the silica, and/or the intumescent material, and/or (b) is configured to have a temperature differential between the other first surface and the other second surface of at least three hundred degrees Celsius when the other width is less than or equal to the quarter of one inch.

Example 7 includes the electrical device of any of Examples 1-6, wherein the chamber cover further comprises a gasket contacting the chassis and configured to prevent vapors and/or liquids from entering or exiting the chamber.

Example 8 includes an apparatus for reducing risk of fire and/or heat arising, from a battery, from spreading, the apparatus comprising: the battery; and thermal insulating material surrounding the battery except for a region through which passes one or more electrical conductors connected to the battery; wherein the thermal insulating material includes a first surface and a second surface opposite the first surface, wherein the first surface and the second surface are separated by a width, and wherein the thermal insulating material (a) includes a ceramic matrix composite material, silica, and/or intumescent material, and/or (b) is configured to have a temperature differential between the first surface and the second surface of at least three hundred degrees Celsius when the width is less than or equal to a quarter of one inch; wherein the first surface, of the thermal insulating material surrounding the battery, faces the battery.

Example 9 includes the apparatus of Example 8, further comprising: a chassis; a chamber in the chassis including at least one battery compartment; wherein the battery surrounded by the thermal insulating material is in a battery compartment; and a chamber cover mounted to the chassis and covering the chamber.

Example 10 includes the apparatus of Example 9, wherein the chamber cover includes another thermal insulating material; wherein the other thermal insulating material includes another first surface and another second surface opposite the other first surface, wherein the other first surface and the other second surface are separated by another width, and wherein the other thermal insulating material (a) includes the ceramic matrix composite material, the silica, and/or the intumescent material, and/or (b) is configured to have a temperature differential between the other first surface and the other second surface of at least three hundred degrees Celsius when the other width is less than or equal to the quarter of one inch.

Example 11 includes the apparatus of Example 10, wherein the chamber cover further includes a thermal conductive material, wherein the thermal conductive material is not the thermal insulating material, wherein the other thermal insulating material of the chamber separates the thermal conductive material from the chamber.

Example 12 includes the apparatus of Example 11, wherein the thermal conductive material includes a metal, a metal alloy, diamond, aluminum nitride, aluminum oxide, silicon carbide, and/or graphite.

Example 13 includes the apparatus of any of Examples 9-12, further comprising an opening in the chassis configured to permit gas, heat, and/or flames to be exhausted from the chamber into an interior of the chassis.

Example 14 includes the apparatus of any of Examples 9-13, wherein each battery compartment, of the chamber, includes another thermal insulating material and one or more penetrations therein configured to pass electrical conductors; wherein the other thermal insulating material includes another first surface and another second surface opposite the other first surface, wherein the other first surface and the other second surface are separated by another width, and wherein the other thermal insulating material (a) includes the ceramic matrix composite material, the silica, and/or the intumescent material, and/or (b) is configured to have a temperature differential between the other first surface and the other second surface of at least three hundred degrees Celsius when the other width is less than or equal to the quarter of one inch.

Example 15 includes an electrical device comprising: a chassis; a chamber in the chassis including at least one battery compartment, wherein each battery compartment is configured to receive at least one battery; a chamber cover configured to be mounted to the chassis and to cover the chamber; and an opening in the chassis configured to permit gas, heat, and/or flames to be exhausted from the chamber into an interior of the chassis.

Example 16 includes the electrical device of Example 15, wherein the chamber cover includes a thermal insulating material, wherein the thermal insulating material includes a first surface and a second surface opposite the first surface, wherein the first surface and the second surface are separated by a width, and wherein the thermal insulating material (a) includes a ceramic matrix composite material, silica, and/or intumescent material, and/or (b) is configured to have a temperature differential between the first surface and the second surface of at least three hundred degrees Celsius when the width is less than or equal to a quarter of one inch; wherein the first surface, of the thermal insulating material of the chamber cover, is configured to face the chamber.

Example 17 includes the electrical device of Example 16, wherein the chamber cover further includes a thermal conductive material, wherein the thermal conductive material is not the thermal insulating material, and wherein the second surface, of the thermal insulating material of the chamber cover, faces the thermal conductive material.

Example 18 includes the electrical device of Example 17, wherein the thermal conductive material includes a metal, a metal alloy, diamond, aluminum nitride, aluminum oxide, silicon carbide, and/or graphite.

Example 19 includes the electrical device of any of Examples 15-18, wherein each battery compartment, of the chamber, includes thermal insulating material and one or more penetrations therein configured to pass electrical conductors, wherein the thermal insulating material includes a first surface and a second surface opposite the first surface, wherein the first surface and the second surface are separated by a width, and wherein the thermal insulating material (a) includes a ceramic matrix composite material, silica, and/or intumescent material, and/or (b) is configured to have a temperature differential between the first surface and the second surface of at least three hundred degrees Celsius when the width is less than or equal to a quarter of one inch.

Example 20 includes the electrical device of any of Examples 15-19, further comprising a battery mounted in a battery compartment, wherein at least a portion of an exterior of the battery is covered by a thermal insulating material except for a portion through which pass one or more electrical conductors connected to the battery, wherein the thermal insulating material includes a first surface and a second surface opposite the first surface, wherein the first surface and the second surface are separated by a width, and wherein the thermal insulating material (a) includes a ceramic matrix composite material, silica, and/or intumescent material, and/or (b) is configured to have a temperature differential between the first surface and the second surface of at least three hundred degrees Celsius when the width is less than or equal to a quarter of one inch.

## Claims

1. An electrical device comprising:
a chassis;
a chamber in the chassis including at least one battery compartment, wherein each battery compartment is configured to receive at least one battery; and
a chamber cover configured to be mounted to the chassis and to cover the chamber;
wherein the chamber cover includes a thermal insulating material, wherein the thermal insulating material includes a first surface and a second surface opposite the first surface, wherein the first surface and the second surface are separated by a width, and wherein the thermal insulating material (a) includes a ceramic matrix composite material, silica, and/or intumescent material, and/or (b) is configured to have a temperature differential between the first surface and the second surface of at least three hundred degrees Celsius when the width is less than or equal to a quarter of one inch;
wherein the first surface, of the thermal insulating material of the chamber cover, faces the chamber.

2. The electrical device of claim 1, wherein the chamber cover further includes a thermal conductive material, wherein the thermal conductive material is not the thermal insulating material, and wherein the second surface, of the thermal insulating material of the chamber cover, faces the thermal conductive material.

3. The electrical device of claim 2, wherein the thermal conductive material includes a metal, a metal alloy, diamond, aluminum nitride, aluminum oxide, silicon carbide, and/or graphite.

4. The electrical device of claims 1-3, further comprising a battery mounted in a battery compartment, wherein at least a portion of an exterior of the battery is covered by another thermal insulating material except for a portion through which passes one or more electrical conductors connected to the battery;
wherein the other thermal insulating material includes another first surface and another second surface opposite the other first surface, wherein the other first surface and the other second surface are separated by another width, and wherein the other thermal insulating material (a) includes the ceramic matrix composite material, the silica, and/or the intumescent material, and/or (b) is configured to have a temperature differential between the other first surface and the other second surface of at least three hundred degrees Celsius when the other width is less than or equal to the quarter of one inch.

5. The electrical device of claim 1-4, further comprising an opening, in the chassis, configured to permit gas, heat, and/or flames to be exhausted from the chamber into an interior of the chassis.

6. The electrical device of claim 1-5, wherein each battery compartment, of the chamber, includes another thermal insulating material and one or more penetrations therein configured to pass electrical conductors;
wherein the other thermal insulating material includes another first surface and another second surface opposite the other first surface, wherein the other first surface and the other second surface are separated by another width, and wherein the other thermal insulating material (a) includes the ceramic matrix composite material, the silica, and/or the intumescent material, and/or (b) is configured to have a temperature differential between the other first surface and the other second surface of at least three hundred degrees Celsius when the other width is less than or equal to the quarter of one inch.

7. The electrical device of claim 1-6, wherein the chamber cover further comprises a gasket contacting the chassis and configured to prevent vapors and/or liquids from entering or exiting the chamber.
